# EUROPEAN PATENT SPECIFICATION

(11) **EP 1 214 830 B1**
(45) Date of publication and mention of the grant of the patent: **27.06.2007**
(21) Application number: 99936509.1
(22) Date of filing: 09.07.1999
(51) Int. Cl.: H04L 29/06, H04Q 7/22, H04Q 7/32, H04Q 7/38

(54) **METHOD FOR THE RESTRICTION OF A MESSAGE SERVICE**
VERFAHREN ZUR BESCHRÄNKUNG EINES NACHRICHTENDIENSTES
PROCEDE DE LIMITATION DE SERVICE D'ENVOI DE MESSAGE

(43) Date of publication of application: 19.06.2002
(73) Proprietor: Nokia Corporation, 02150 Espoo (FI)
(72) Inventor: MOLNAR, Valeria, H-1237 Budapest (HU); OHMAN, Ismo, FIN-05460 Hyvinkää (FI)
(74) Representative: TBK-Patent
(86) International application number: PCT/EP1999/004847
(87) International publication number: WO 2001/005118

(56) References cited:
- WO-A-97/04580
- US-A- 5 875 404
- US-A- 5 903 726

## Description

### Field of the Invention

The present invention relates to a method for restricting a message service in a communication network. The present invention is further related to a network and a terminal for a use in said network and which are capable of restricting a message service.

### Related Background Art

The short message service (SMS) for the public land mobile networks (PLMN) has recently gained increasing popularity. Particularly, the most frequent users of the short message service are children and young people. However, their telephone bills are often paid by their parents, who are surely interested in a restriction of the short message service, at least in view of a usage of expensive service numbers. Thus, there arises the necessity to restrict the rights of certain users (e.g. children) of sending short messages.

Furthermore, also the blocking of receiving short messages might be important, since there may be certain senders, for example of the internet, which might intend to submit messages with malicious contents.

In addition, the operator of a network might like to have a possibility to suppress the use of the short message service, for example for roaming subscribers whose home operator does not have a charging agreement with the visited subscriber.

Document WO 99/20063 discloses a method and an apparatus for identifying a sender of a short message, with which a mobile terminated short message service could be prevented.

However, this method according to document WO 99/20063 is not able to restrict the rights for certain terminal users to send a short message, i.e. the prior art does not provide a method for the mobile originated case. Moreover, a chance for the operator to configure the usage of a message service in his own network is completely missing.

Reference GSM 03.15 of the European Telecommunications Standards Institute (ETS 300 533) discloses a technical realization of operator determined barring (ODB), wherein the barring is applied or changed in the home location register (HLR) of the corresponding home PLMN and an invocation of the barring is in the mobile originated case done in the visitor location register (VLR) and in the mobile terminated case done in the HLR. However, the ODB is tightly effected to a mobile switching center which is currently visited by a mobile station. Furthermore, since the ODB is defined in the HLR, it can only be effected for home subscribers and not for visitor subscriber.

Document US5903726 discloses a method for restricting a message service in a communication network, wherein the sender and the receiver are identified by the respective addresses. The document discloses keeping a record containing information about certain addresses with which a message communication is not allowed and analysing and preventing communication of a message if it is related to an address which is not allowed. However, US5903726, only discloses message restriction at the receiving end and the restriction takes place in the HLR.

### Summary of the Invention

Therefore, it is an object of the present invention to provide a method according to claim 1 and a network according to claim 7 for restricting a message service in a communication network, which is free from the above mentioned drawbacks.

This object can be achieved by a method for restricting a message service in a communication network, wherein at least a sender and a recipient are to be involved if a message communication takes place in said network, and each of which can be identified by a respective address; said method comprising the steps of keeping a record containing information about certain addresses with which a message communication is not allowed; receiving a request for establishing a message communication; analyzing on the basis of the information in the record whether a message communication is allowed; and preventing the transmission of a message if said message is related to an address which is not allowed according to the analyzing step.

Furthermore, the object is achieved by a network being capable of restricting a message service, comprising at least one sender and one recipient, wherein each has an address; a plurality of switching centers, wherein a terminal is always related to a visited switching center; a record in which information about the addresses being not allowed is written; an analyzing means for analyzing said record whether an address is unallowed; and means, operable to prevent the transmission of a message if said message is related to an address which is not allowed according to the analysis of the analyzing means.

Moreover, an embodiment of the present invention proposes a terminal for use in a network, said network comprising at least one sender and one recipient, wherein each has an address; a plurality of switching centers, wherein said terminal is always related to a visited switching center; characterized in that said terminal comprises a record in which information about the addresses being not allowed is written; an analyzing means for analyzing said record whether an address is unallowed; and means, operable to prevent the transmission of a message if said message is related to an address which is not allowed according to the analysis of the analyzing means.

Advantageous further developments of the present invention are as set out in the respective dependent claims.

Hence, it is an advantage of the present invention that the charging and load of a network caused by a big amount of free messages can be suppressed. The present invention can be not only effected in a visited switching center, but also in an interworking switching center.

Furthermore, a specific restriction can be defined by either the operator or a subscriber of the network, whereby for example message services originating from foreign countries or, more common, from "foreign" message service centers can be restricted. Thus, the present invention provides a method for restriction which can not only applied to home subscribers but also to visitor subscribers.

In general, the method according to the present invention saves switch capacity, link capacity between a switching center of a network and a message service center of that switching center, and also the capacity of said message service center.

Preferred embodiments of the present invention are described herein below in detail by way of example with reference to the accompanying drawings.

### Brief Description of the Drawings

Fig. 1 shows a schematic diagram of a network structure according to the present invention.
Fig. 2 shows the relationship between means for preventing a message transmission according to the present invention.
Fig. 3 shows a flow-chart of the method according to the present invention.

### Detailed Description of the Preferred Embodiments

According to the present invention, a message service in a communication network can be restricted on the basis of addresses of elements of the network which are involved in a corresponding message communication.

Specifically, information about those addresses of network elements to be involved in a message communication which are judged by a deciding entity as being not allowed for such a message communication is written in a record. Every time when a message is to be transmitted in the network, the record is checked by an analyzing means. Consequently, if the message is related to an unallowed address, then the transmission is suitably prevented. According to the present invention, this prevention is effected at the same position in the network where the record is located.

The above outlined idea of the present invention is obviously applicable to any communication network where a message service is incorporated, where addresses are imparted to those network elements to be involved in a corresponding message communication, and where it is possible to identify these addresses, which is according to the present invention considered as a self-evident property of addresses.

The deciding entity who judges upon the allowance of a message communication can of course be an operator of the network. In that case, this operator most likely intends to define restrictions for the whole network, e.g. restrictions for home subscribers or visitor subscribers or for all subscribers of the network, but maybe also only for a group for subscribers, as will be explained later.

On the other hand, also the subscribers of the network might want to have a specific message communication configuration for their network terminals, in order to define unallowed destinations or unallowed origins. Accordingly, an A-subscriber might prohibit the sending of messages from his terminal to certain addresses, while a B-subscriber might not permit to receive messages with his terminal from unwanted addresses.

In view of the reasons for which a message communication might be unwanted, the relevant addresses among the involved network elements for the decision upon an allowance of a message communication are the originating subscriber and the originating or terminating message service center. Thus, there is always a sender and a recipient defined in a message communication. Depending on the deciding entity and "its" viewpoint, the involved message service center can be regarded as originating or terminating, however, it is stated that for a message communication there is usually only one message service center necessary, the addresses of which message service center then serves as an originating address or terminating address. Furthermore, a decision on the A-subscriber address and the B-subscriber address is also possible and thus included in the present invention.

As a consequence of the introducing remarks, it is apparent that the present invention is highly applicable to public land mobile networks (PLMN) and its short message service (SMS). Therefore, the further description is made by reference to this example. However, it is to be noted that this example is only intended to be illustrating but by no way limiting.

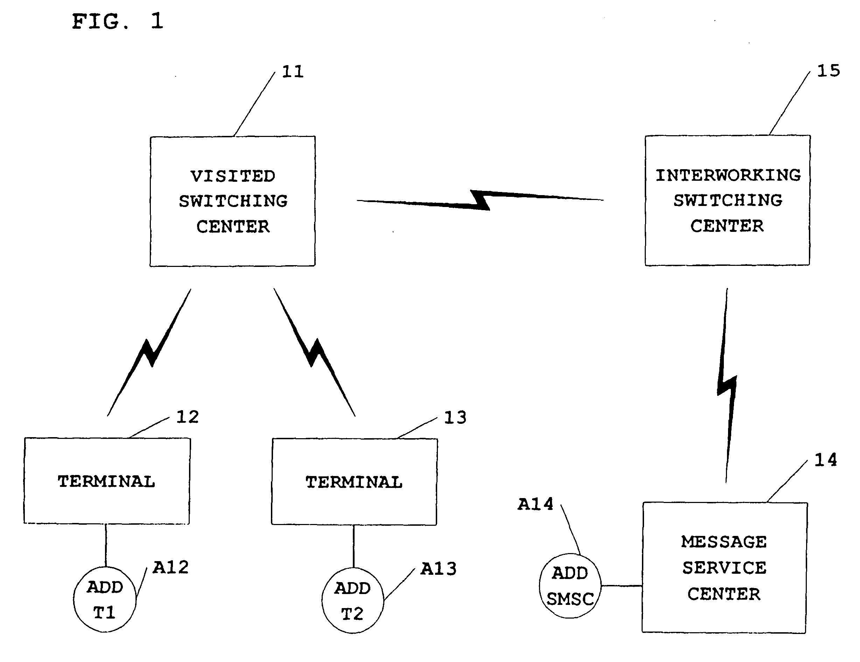

Referring now to Fig. 1, there is shown a schematic diagram of a basic structure of an example for a communication network. According to a PLMN as the above mentioned example for such a communication network, there is a mobile switching center 11, which switches incoming and outgoing calls, and particularly incoming and outgoing messages as those of the SMS. Terminals 12, 13 of the PLMN, usually mobile stations, are in case of a connection to the PLMN always related to a mobile switching center. The mobile switching center to which these terminals currently are related is referred to as a visited mobile switching center 11 (VMSC).

For the handling of the short message service, there is a short message service center 14 (SMSC) linked to the network via an interworking functionality of a mobile switching center. This mobile switching center is hereinafter called interworking mobile switching center 15 (IWMSC). However, it is mentioned that according to the direction of a message communication, this IWMSC 15 can also be regarded as a gateway mobile switching center GMSC, which denotation is not used herein for the sake of simplicity. A message to be transmitted is thus at any time in either direction on the way between a terminal and a SMSC.

As mentioned before, at least the subscribers of the terminals 12, 13, and the message service center 14 comprise addresses A12, A13, and A14, respectively. By virtue of these addresses, it is clearly defined whether a subscriber is a home subscriber 12 or a visitor subscriber 13 (so-called "roamer") in the current PLMN and whether the SMSC used for a short message transmission is a home or foreign SMSC. As a result, the addresses A12, A13 and A14 of the network elements to be involved in a message transmission are highly suitable to judge upon the allowance of a communication with these elements.

Consequently, the following examples are conceivable.

In the mobile originated case,-every message communication takes place via the respective VSMC 11. If a visitor subscriber 13 intends to use the short message service, this might be unwanted by the operator, and thus, a restriction can already be made in the VMSC 11 due to the A-subscriber address A13.

In that manner foreign networks can be barred one by one. That is, the operator can, for example, define a prevention for all subscribers with the same country code (CC) and/or the same network code (NDC). Thus, a restriction can be defined for a group of subscribers.

If in a further mobile originated case a home subscriber 12 intends to use a SMSC 14 out of the home PLMN, this might also be unwanted by the operator. However, the connection to the foreign unallowed SMSC 14 is established via the IWMSC 15, and thus, a restriction can be made in the IWMSC 15 due to the SMSC address A14. In that manner, a SMSC barring can be valid for the whole visitor network.

This example applies of course in a very similar way to the case if a visitor subscriber intends to use "his" own SMSC.

In a mobile terminated case, all messages are received via the current VMSC 11 for either a home subscriber 12 or a visitor subscriber 13. If a foreign SMSC 14 was used to transmit a message, this might be unwanted by the operator. Hence, a restriction can be made in the VMSC 11 due to the SMSC address A14.

Further, if an operator wants to restrict the mobile terminated transmission of messages for roamers coming from a foreign PLMN, a barring would be defined for the B-subscriber address A13.

It is noted that in the mobile terminated case, also the A-subscriber address can be used for a restriction in the VMSC 11, possibly according to a different reason. Again, the subscribers can be barred in groups as explained above.

Specifically, the examples for the restriction of a subscriber-address based restriction in either mobile originated case or mobile terminated case can included such groups as all subscribers of an operator, or all subscribers having a specific type of subscription like being private subscribers, being employees of a (specific) company or all being members of a family.

According to the present invention, a message transmission is prevented at the position in the network where a respective address is detected as "unwanted". In most cases, particularly in cases of a strategic restriction of short message service use, the prevention is located in the VMSC 11 and the IWMSC 15, as can be gathered from the foregoing examples.

In contrast thereto, for example in cases of more private nature than in the above examples, it is of course conceivable that the prevention could also be done in a terminal according to the fact that also the restriction was done in the terminal.

In that case, it is further conceivable that the restriction for a terminal is not done in this terminal, but in another terminal, for example, if both terminals belong to the same subscriber but bear different addresses. The right to bar a terminal with another terminal should certainly be defined.

However, as a matter of course it is clear that the amount of restricted addresses would differ extremely from the above explained examples due to the lower resources of a terminal of a PLMN, i.e. a mobile station.

Hence, means for writing a decision information upon unallowed addresses to a record for that purpose, means for analyzing this record of information about unwanted addresses as well as the record itself are located in the VMSC 11 and the IWMSC 15, respectively. However, as mentioned above, in principal they can also be located in a terminal.

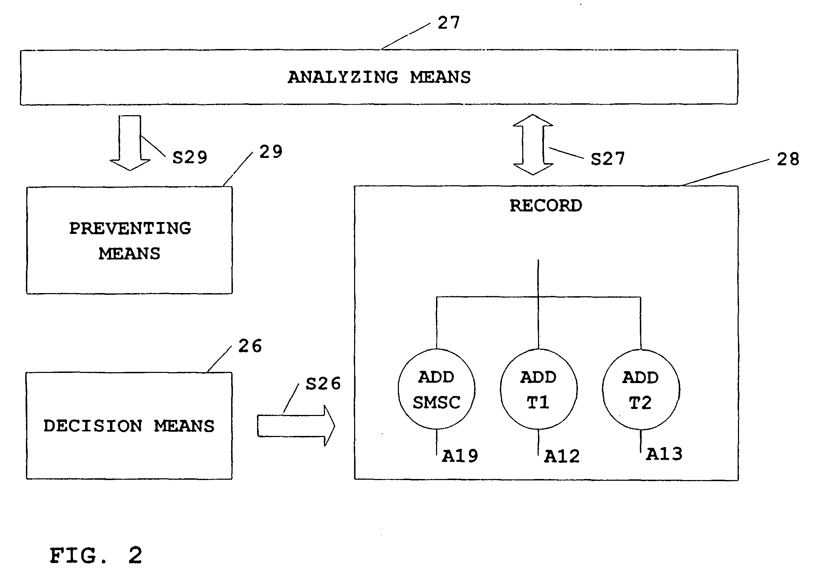

These means for performing the present invention are shown in Fig. 2, wherein reference numeral 26 denotes decision means, 27 analyzing means, 28 a record, and 29 preventing means. To avoid any additional signaling between the network elements, these means for performing the present invention are all included in the same location of the network, i.e. in the same network element. To be precise, this advantage of the present invention can be achieved that at the same network location where certain addresses are determined as to be unallowed for a message communication for which reason the decision means 26 are configured in accordance to this decision upon these certain addresses, there is a record 28 held which contains information about these certain addresses written thereto by the decision means 26 (step S26), and an analyzing means 27 to check (step S27) whether an address is unallowed. Consequently, also the preventing means 29 to which the result of the analysis of said analyzing means 27 is returned (step 529) is included with the other means in said network location.

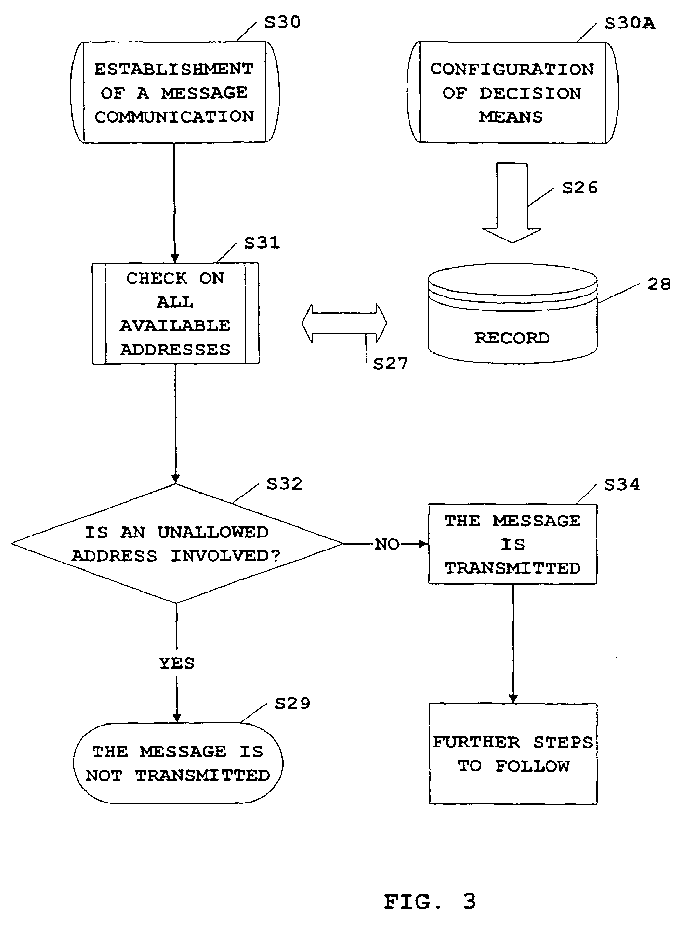

The steps S26, S27 and S29 are shown in Fig. 2 to illustrate the relations between the different means, but will become still more apparent upon the following description of the method according to the present invention which is depicted in Fig. 3.

In a preceding step S30A, a deciding entity among the above given examples configures the decision means 26 upon a judgement on addresses by which it is determined whether they shall be allowed for a message communication or not. In a following step S26 there is information about the addresses which are not allowed written in a record 28.

When at any later time a message communication is established in the network in a step S30, then the method proceeds to a step S31, wherein the analyzing means 27 being located in the responsible network element checks all available information in the record 28. The result of this analysis is taken in a step S27 and forwarded to a step S32. Therein the result of the analysis is checked, whether an unallowed address is involved or not. If this is the case, then the transmission of the message will be prevented by the preventing means 29 in a step S29. If the answer is "no", the message will be transmitted further in a step S34 with more steps to follow.

As is described above, the present invention proposes a method for restricting a message service in a communication network, wherein at least a sender 12, 13, 14 and a recipient 12, 13, 14 are to be involved if a message communication takes place in said network, and each of which can be identified by a respective address A12, A13, A14; said method comprising the steps of keeping a record 28 containing information about certain addresses with which a message communication is not allowed; receiving a request for establishing a message communication S30; analyzing S31, S27, S32 on the basis of the information in the record whether a message communication is allowed; and preventing S29 the transmission of a message if said message is related to an address which is not allowed according to the analyzing step. The present invention further proposes a network being capable of restricting a message service, and a terminal for use in the network.

It should be understood that the above description and accompanying figures are only intended to illustrate the present invention by way of example only. Hence, it is obvious to those skilled in the art that as technology advances the basic idea of the invention can be implemented in various ways. The invention and its embodiments are thus not restricted to the above examples but may vary within the scope of the attached claims.

## Claims

1. A method for restricting a message service in a communication network, wherein
at least a sender (12, 13, 14) and a recipient (12, 13, 14) are to be involved if a message communication takes place in said network, and each of which can be identified by a respective address (A12, A13, A14);
said method comprising the steps of
keeping a record (28) containing information about certain addresses with which a message communication is not allowed;
deciding (S30A) whether a message communication with a certain address is allowed or not, and writing (S26) information of addresses being not allowed in said record (28), thus determining contents of said record (28);
receiving a request for establishing a message communication (S30);
analyzing (S31, S27, S32) on the basis of the information in the record whether a message communication is allowed; and
preventing (S29) the transmission of a message if said message is related to an address which is not allowed according to the analyzing step,
**characterized in that**
each of said decision step (S30A) and said preventing step (S29) is done in a switching center (11, 15) of said communication network, and said record (28) is kept in said switching center (11, 15).

2. A method according to claim 1, wherein one of said sender and said receiver is a message service center (14).

3. A method according to claim 1, wherein said switching center is a visited switching center (11), to which a terminal of a subscriber being involved in said message communication is related at the time, when said message is to be transmitted.

4. A method according to claim 1, wherein said switching center is an interworking switching center (15) which is to be involved, if a message communication takes place.

5. A method according to claim 1 or 2, wherein said contents of said record are subscriber specific.

6. A method according to claim 5, wherein said record is common to a group of subscribers.

7. A network being capable of restricting a message service, comprising
at least one sender (12, 13, 14) and one recipient (12, 13, 14), wherein each has an address (A12, A13, A14);
a plurality of switching centers, wherein a terminal is always related to a visited switching center (11);
a record (28) in which information about the addresses being not allowed is written;
an analyzing means (27) for analyzing with the help of said record (28) whether an address is unallowed;
means (29), operable to prevent the transmission of a message if said message is related to an address which is not allowed according to the analysis of the analyzing means (27); and
decision means (26) for deciding on the permission for an address to be involved in a message communication,
**characterized in that**
said record (28), said analyzing means (27), said preventing means (29) and said decision means (26) are located in each of said switching centers (11).

8. A network according to claim 7, wherein one of said sender and said recipient is a message service center (14).

9. A network according to claim 7, further comprising at least one interworking switching center (15), wherein said record (28), said analyzing means (27), said preventing means (29) and said decision means (26) are located in said interworking switching center (15).

10. The network of claim 7, wherein said record in which information about unallowed addresses is written relates to at least one address corresponding to said at least one sender originating a message to a switching center of further communication to said recipient via a message service center of said network.

11. A network element capable of restricting a message service between at least one sender (12, 13, 14) and one recipient (12, 13, 14), and comprising a switching center, wherein each has an address (A12, A13, A14) comprising:
a record (28) in which information about unallowed addresses is written;
an analyzing means (27) for analyzing with the help of said record (28) whether an address is unallowed;
means (29), operable to prevent transmission of a message if said message is related to an address which is unallowed according to the analysis of the analyzing means (27) ; and
decision means (26) for deciding on a permission for an address in a message communication, wherein
said record (28), said analyzing means (27), said preventing means (29) and said decision means (26) are located in said network element comprising a switching center.

12. The network element of claim 11, wherein said record in which information about unallowed addresses is written relates to at least one address corresponding to said at least one sender originating a message to the switching center for further communication to said recipient via a message service center of said network.

## Patentansprüche

1. Verfahren zum Beschränken eines Nachrichtendienstes in einem Kommunikationsnetzwerk, wobei
zumindest ein Sender (12, 13, 14) und ein Empfänger (12, 13, 14) einzubeziehen sind, wenn eine Nachrichtenkommunikation in dem Netzwerk stattfindet, und
wobei jeder von diesen durch eine entsprechende Adresse (A12, A13, A14) identifiziert werden kann;
wobei das Verfahren die Schritte aufweist:
Beibehalten einer Aufzeichnung (28), die Informationen über bestimmte Adressen enthält, mit welchen eine Nachrichtenkommunikation nicht erlaubt ist;
Entscheiden (S30A), ob eine Nachrichtenkommunikation mit einer bestimmten Adresse erlaubt ist oder nicht, und Schreiben (S26) von Informationen über Adressen, die nicht erlaubt sind, in die Aufzeichnung (28), womit Inhalte der Aufzeichnung (28) bestimmt werden;
Empfangen einer Anforderung zum Herstellen einer Nachrichtenkommunikation (S30);
Analysieren (S31, S27, S32) basierend auf den Informationen in der Aufzeichnung, ob eine Nachrichtenkommunikation erlaubt ist; und
Verhindern (S29) der Übertragung einer Nachricht, wenn sich die Nachricht auf eine Adresse bezieht, die gemäß dem Analyseschritt nicht erlaubt ist,
**dadurch gekennzeichnet, dass**
jeder des Entscheidungsschritts (S30A) und des Verhinderungsschritts (S29) in einem Schaltungszentrum (11, 15) des Kommunikationsnetzwerks unternommen wird und die Aufzeichnung in dem Schaltungszentrum (11, 15) beibehalten wird.

2. Verfahren gemäß Anspruch 1, wobei einer des Senders und des Empfängers ein Nachrichtendienstzentrum (14) ist.

3. Verfahren gemäß Anspruch 1, wobei das Schaltungszentrum ein besuchtes Schaltungszentrum (11) ist, auf welches sich ein Endgerät eines Teilnehmers, der in die Nachrichtenkommunikation einbezogen ist, zu der Zeit, wenn die Nachricht zu übertragen ist, bezieht.

4. Verfahren gemäß Anspruch 1, wobei das Schaltungszentrum ein Zusammenarbeitsschaltungszentrum (15) ist, welches einzubeziehen ist, wenn eine Nachrichtenkommunikation stattfindet.

5. Verfahren gemäß Anspruch 1 oder 2, wobei die Inhalte der Aufzeichnung Teilnehmer-spezifisch sind.

6. Verfahren gemäß Anspruch 5, wobei die Aufzeichnung für eine Gruppe von Teilnehmern gemeinsam ist.

7. Netzwerk, das dazu fähig ist, einen Nachrichtendienst zu beschränken, mit:
zumindest einem Sender (12, 13, 14) und einem Empfänger (12, 13, 14), wobei jeder eine Adresse (A12, A13, A14) besitzt;
einer Vielzahl von Schaltungszentren, wobei sich ein Endgerät immer auf ein besuchtes Schaltungszentrum (11) bezieht;
einer Aufzeichnung (28), in welche Informationen über die nicht erlaubten Adressen geschrieben sind;
einer Analyseeinrichtung (27) zum Analysieren mit der Hilfe der Aufzeichnung (28), ob eine Adresse unerlaubt ist;
einer Einrichtung (29), die betreibbar ist, um die Übertragung einer Nachricht zu verhindern, wenn sich die Nachricht auf eine Adresse bezieht, die gemäß der Analyse der Analyseeinrichtung (27) nicht erlaubt ist; und
einer Entscheidungseinrichtung (26) zum Entscheiden über die Erlaubnis für eine Adresse, die in eine Nachrichtenkommunikation einzubeziehen ist,
**durch gekennzeichnet, dass**
sich die Aufzeichnung (28), die Analyseeinrichtung (27), die Verhinderungseinrichtung (29) und die Entscheidungseinrichtung (26) in jedem der Schaltungszentren (11) befinden.

8. Netzwerk gemäß Anspruch 7, wobei einer des Senders und des Empfängers ein Nachrichtendienstzentrum (14) ist.

9. Netzwerk gemäß Anspruch 7, weiter mit zumindest einem Zusammenarbeitsschaltungszentrum (15), wobei sich die Aufzeichnung (28), die Analyseeinrichtung (27), die Verhinderungseinrichtung (29) und die Entscheidungseinrichtung (26) in dem Zusammenarbeitsschaltungszentrum (15) befinden.

10. Netzwerk gemäß Anspruch 7, wobei sich die Aufzeichnung, in welche Informationen über unerlaubte Adressen geschrieben sind, auf zumindest eine Adresse bezieht entsprechend dem zumindest einen Sender, der eine Nachricht zu einem Schaltungszentrum zur weiteren Kommunikation zu dem Empfänger über ein Nachrichtendienstzentrum des Netzwerks veranlasst.

11. Netzwerkelement, das dazu fähig ist, einen Nachrichtendienst zwischen zumindest einem Sender (12, 13, 14) und einem Empfänger (12, 13, 14) zu beschränken, wobei jeder eine Adresse (A12, A13, A14) besitzt, mit:
einer Aufzeichnung (28), in welche Informationen über unerlaubte Adressen geschrieben sind;
einer Analyseeinrichtung (27) zum Analysieren mit der Hilfe der Aufzeichnung (28), ob eine Adresse unerlaubt ist;
einer Einrichtung (29), die betreibbar ist, um eine Übertragung einer Nachricht zu verhindern, wenn sich die Nachricht auf eine Adresse bezieht, die gemäß der Analyse der Analyseeinrichtung (27) unerlaubt ist; und
einer Entscheidungseinrichtung (26) zum Entscheiden über eine Erlaubnis für eine Adresse in einer Nachrichtenkommunikation, wobei
sich die Aufzeichnung (28), die Analyseeinrichtung (27), die Verhinderungseinrichtung (29) und die Entscheidungseinrichtung (26) in dem Netzwerkelement befinden, das ein Schaltungszentrum aufweist.

12. Netzwerkelement gemäß Anspruch 11, wobei sich die Aufzeichnung, in welche Informationen über unerlaubte Adressen geschrieben sind, auf zumindest eine Adresse bezieht entsprechend dem zumindest einen Sender, der eine Nachricht zu dem Schaltungszentrum zur weiteren Kommunikation zu dem Empfänger über ein Nachrichtendienstzentrum des Netzwerks veranlasst.

## Revendications

1. Procédé de restriction d'un service de messagerie dans un réseau de communication, dans lequel
au moins un envoyeur (12, 13, 14) et un receveur (12, 13, 14) sont impliqués si une communication de message se produit dans ledit réseau, et dont chacun peut être identifié par une adresse respective (A12, A13, A14) ;
ledit procédé comprenant les étapes consistant à
conserver un enregistrement (28) contenant des informations concernant certaines adresses avec lesquelles une communication de message n'est pas autorisée ;
décider (S30A) si une communication de message avec une certaine adresse est autorisée ou non, et écrire (S26) des informations d'adresses n'étant pas autorisées dans ledit enregistrement (28), de manière à déterminer le contenu dudit enregistrement (28) ;
recevoir une requête pour établir une communication de message (S30) ;
analyser (S31, S27, S32) sur la base des informations dans l'enregistrement si une communication de message est autorisée ; et
prévenir (S29) la transmission d'un message si ledit message concerne une adresse qui n'est pas autorisée conformément à l'étape d'analyse,
**caractérisé en ce que** ladite étape de décision (S30A) et ladite étape de prévention (S29) sont effectuées dans un centre de commutation (11, 15) dudit réseau de communication, et ledit enregistrement (28) est conservé dans ledit centre de commutation (11, 15).

2. Procédé selon la revendication 1, dans lequel l'un parmi ledit envoyeur et ledit receveur est un centre de service de messagerie (14).

3. Procédé selon la revendication 1, dans lequel ledit centre de commutation est un centre de commutation visité (11), auquel un terminal d'un abonné étant impliqué dans ladite communication de message est associé à la fois, lorsque ledit message doit être transmis.

4. Procédé selon la revendication 1, dans lequel ledit centre de commutation est un centre de commutation d'interfonctionnement (15) qui doit être impliqué, si une communication de message se produit.

5. Procédé selon la revendication 1 ou 2, dans lesquels ledit contenus dudit enregistrement sont spécifiques de l'abonné.

6. Procédé selon la revendication 5, dans lequel ledit enregistrement est commun à un groupe d'abonnés.

7. Réseau étant capable de restreindre un service de messagerie, comprenant
au moins un envoyeur (12, 13, 14) et un receveur (12, 13, 14) dont chacun a une adresse (A12, A13, A14) ;
une pluralité de centres de commutation, dans lequel un terminal est toujours relié à un centre de commutation visité (11) ;
un enregistrement (28) dans lequel des informations concernant les adresses n'étant pas autorisées sont écrites ;
des moyens d'analyse (27) pour analyser à l'aide dudit enregistrement (28), si une adresse n'est pas autorisée ;
des moyens (29), fonctionnels pour prévenir la transmission d'un message si ledit message est associé à une adresse qui n'est pas autorisée conformément à l'analyse des moyens d'analyse (27) ; et
des moyens de décision (26) pour décider de l'autorisation pour une adresse à être impliquée dans une communication de message,
**caractérisé en ce que**
ledit enregistrement (28), lesdits moyens d'analyse (27), lesdits moyens de prévention (29) et lesdits moyens de décision (26) sont situés dans chacun desdits centres de commutation (11).

8. Réseau selon la revendication 7, dans lequel l'un parmi ledit envoyeur et ledit receveur est un centre de service de messagerie (14).

9. Réseau selon la revendication 7, comprenant en outre au moins un centre de commutation d'interfonctionnement (15), dans lequel ledit enregistrement (28), lesdits moyens d'analyse (27), lesdits moyens de prévention (29) et lesdits moyens de décision (26) sont situés dans ledit centre de commutation d'interfonctionnement (15).

10. Réseau selon la revendication 7, dans lequel ledit enregistrement dans lequel des informations concernant les adresses non autorisées sont écrites concerne au moins une adresse correspondant audit au moins un envoyeur émettant un message à un centre de commutation pour communication plus avant audit receveur par l'intermédiaire d'un centre de service de messagerie dudit réseau.

11. Elément de réseau capable de restreindre un service de messagerie entre au moins un envoyeur (12, 13, 14) et un receveur (12, 13, 14), et comprenant un centre de commutation, dans lequel chacun a une adresse (A12, A13, A14) comprenant :
un enregistrement (28) dans lequel des informations concernant des adresses non autorisées sont écrites ;
des moyens d'analyse (27) pour analyser à l'aide dudit enregistrement (28) si une adresse n'est pas autorisée ;
des moyens (29), opérationnels pour prévenir la transmission d'un message si ledit message est associé à une adresse qui n'est pas autorisée conformément à l'analyse des moyens d'analyse (27) ; et
des moyens de décision (26) pour décider d'une autorisation d'une adresse dans une communication de message, dans lequel
ledit enregistrement (28), lesdits moyens d'analyse (27), lesdits moyens de prévention (29) et lesdits moyens de décision (26) sont situés dans ledit élément de réseau comprenant un centre de commutation.

12. Elément de réseau selon la revendication 11, dans lequel ledit enregistrement dans lequel des informations concernant les adresses non autorisées sont écrites concerne au moins une adresse correspondant audit au moins un envoyeur émettant un message au centre de commutation pour communication plus avant audit receveur par l'intermédiaire d'un centre de service de messagerie dudit réseau.
